# EUROPÄISCHE PATENTSCHRIFT

(11) **EP 3 038 858 B1**
(45) Veröffentlichungstag und Bekanntmachung des Hinweises auf die Patenterteilung: **13.03.2019**
(21) Anmeldenummer: 14758357.9
(22) Anmeldetag: 28.08.2014
(51) Int. Cl.: B60N 2/68, B60N 2/20, B60N 2/22

(54) **FAHRZEUGSITZ, INSBESONDERE KRAFTFAHRZEUGSITZ**
VEHICLE SEAT, PARTICULARLY A MOTOR VEHICLE SEAT
SIÈGE DE VÉHICULE, EN PARTICULIER SIÈGE DE VÉHICULE AUTOMOBILE

(30) Priorität: 30.08.2013 DE 102013217339; 10.12.2013 DE 102013225478
(43) Veröffentlichungstag der Anmeldung: 06.07.2016
(73) Patentinhaber: Adient Luxembourg Holding S.à r.l., 1855 Luxembourg (LU)
(72) Erfinder: BOLTE, Andreas, 66482 Zweibrücken (DE); LINGE, Martin, 73102 Birenbach (DE); BECKER, Ulrich, 66869 Kusel (DE); KUTSCHAL, Tobias, 72766 Reutlingen (DE)
(74) Vertreter: Liedhegener, Ralf
(86) Internationale Anmeldenummer: PCT/EP2014/068287
(87) Internationale Veröffentlichungsnummer: WO 2015/028560

(56) Entgegenhaltungen:
- WO-A1-98/32627
- DE-A1-102007 042 285

## Beschreibung

Die Erfindung betrifft einen Fahrzeugsitz, insbesondere einen Kraftfahrzeugsitz, mit einem Sitzunterbau, welcher als tragende Struktur eine Sitzunterbaustruktur aufweist, einer Sitzlehne, welche als tragende Struktur eine in Schalenbauweise ausgeführte Lehnenstruktur aufweist, und mindestens einem Beschlag, der die Sitzunterbaustruktur mit der Lehnenstruktur verbindet, wobei der Beschlag ein an der Lehnenstruktur befestigtes Beschlagoberteil und ein an der Sitzunterbaustruktur befestigtes Beschlagunterteil aufweist.

### Stand der Technik

Aus der WO 2004/113114 A2 ist ein als Sportsitz ausgeführter gattungsgemäßer Fahrzeugsitz bekannt, dessen Sitzlehne als tragende Struktur eine Lehnenschale aufweist. Zur Anbindung eines Beschlagoberteils an die Lehnenschale ist ein Adapter zwischen dem Beschlagoberteil und der Lehnenschale vorgesehen. Der Adapter ist mit der Lehnenschale verschraubt. Zur Vermeidung einer Rissbildung in der Lehnenschale, ist diese in dem Verschraubungsbereich mit Einlegeteilen aus Metall oder hartem Kunststoff verstärkt. Die Einlegeteile sind in das Schalenmaterial eingelegt und mit diesem verpresst.

Aus der DE 199 05 215 A1 ist ein Fahrzeugsitz mit einer zweischaligen Sitzlehne und einem Beschlag, der eine Sitzunterbaustruktur mit der Lehnenstruktur verbindet, bekannt. Ein Beschlagoberteil des Beschlags ist in einen eingesenkten Abschnitt eines aus einer Hinterschale und einer Vorderschale zusammengesetzten Grundkörpers der Lehne eingelegt und mittels mehrerer, als Schrauben ausgeführter, zusätzlicher Verbindungselemente mit der Hinterschale verschraubt.

Die EP 2 463 142 A2 offenbart einen Beschlag für einen Fahrzeugsitz zur Neigungsverstellung einer Sitzlehne gegenüber einem Sitzunterbau. Zur formschlüssigen, stoffschlüssigen und/oder kraftschlüssigen Anordnung und Befestigung des Beschlagoberteils an der Sitzlehne können alle zum Anmeldetag der EP 2 463 142 A2 bekannten und bewährten Befestigungsverfahren verwendet werden. Beispielsweise können Beschlagoberteil und Rückenlehne verschweißt, verklebt, verschraubt und/oder vernietet werden.

Aus der EP 0 929 412 B1 ist eine Lehnenstruktur mit einem umlaufenden Rahmen bekannt, wobei der Rahmen mit einem Querelement im oberen Bereich der Lehnenstruktur verstärkt ist. Das Querelement ist durch geeignete Mittel wie Halteschrauben, Schweißverbindungen oder eine hochbelastbare Kunstharzverklebung in Position gehalten. Die Lehnenstruktur ist mittels zweier als Kupplungen bezeichneter Beschläge an einer Sitzunterbaustruktur befestigbar. Die Beschlagoberteile sind mittels Befestigungsmitteln mit der Lehnenstruktur verbunden.

Aus der DE 10 2007 042 285 A1 ist ein Fahrzeugsitz bekannt, mit einer Rückenlehne, die mittels eines Lehnenverstellers mit einem Sitzteil verbunden ist, wobei der Lehnenversteller ein Teil aufweist, das mit der Rückenlehne oder mit dem Sitzteil verbunden ist, wobei in die Rückenlehne, in das Teil und/oder in das Sitzteil mindestens eine Senke eingeformt ist, die die Lage des Teils relativ zu der Rückenlehne und/oder zu dem Sitzteil in mindestens einer Richtung festlegt.

Die WO 98/32627 A1 offenbart einen Fahrzeugsitz mit einer Rückenlehne, die mittels eines Beschlags drehbar an einer Sitzschienenanordnung angelenkt ist. Die Rückenlehne ist eine einteilige Schale ausgebildet, die einen Lehnenrahmen zur Aufnahme eines Lehnenpolsters und einen Sitzkissen-Stützabschnitt aufweist.

### Aufgabe

Der Erfindung liegt die Aufgabe zu Grunde, einen Fahrzeugsitz zu verbessern, insbesondere eine Verbindung zwischen einer Lehnenstruktur und einem Beschlagoberteil hinsichtlich Festigkeit und Kosten zu optimieren. Zudem soll die Verbindung eine Verwendung einer Lehnenschale, insbesondere aus einem Leichtbauwerkstoff, als Lehnenstruktur ermöglichen, ohne dass diese Lehnenschale durch Zusatzteile, wie beispielsweise Einlegeteile oder sonstige Verstärkungsteile im Anbindungsbereich zu dem Beschlagoberteil verstärkt werden muss. Insbesondere soll die Anzahl der Bauteile des Fahrzeugsitzes gering gehalten werden.

### Lösung

Diese Aufgabe wird erfindungsgemäß durch einen Fahrzeugsitz gemäss Anspruch 1 gelöst.

Dadurch, dass das Beschlagoberteil formschlüssig in einer Vertiefung der Lehnenstruktur angeordnet ist und mittels eines Klebstoffes stoffschlüssig mit der Lehnenstruktur verbunden ist, kann auf eine Schraubverbindung zur Übertragung von Drehmomenten und Kräften zwischen dem Beschlagoberteil und der Lehnenstruktur verzichtet werden. Formschlüssig bedeutet in diesem Zusammenhang, dass zumindest eine relative Verdrehung zwischen dem Beschlagoberteil und der Lehnenstruktur um eine in Querrichtung verlaufende Achse, insbesondere die Lehnenschwenkachse, vermieden ist. Durch die formschlüssige Verbindung sind einzelne Konturen des Beschlagoberteils einzelnen Konturen der Lehnenstruktur bezüglich einer solchen Verdrehung im Weg. Die daraus resultierende Sperrung der Drehbewegung ist in mindestens einer Drehrichtung, vorzugsweise in beiden möglichen Drehrichtungen vorgesehen. Der Formschluss erfolgt unmittelbar durch die Konturen von Beschlagoberteil und Lehnenstruktur. Auf zusätzliche Verbindungselemente wie Stifte, Niete oder Schrauben kann somit verzichtet werden. Die Festigkeit der formschlüssigen Verbindung ist durch eine zusätzliche stoffschlüssige Verbindung mittels des Klebstoffes, erhöht. Kräfte in Querrichtung werden insbesondere durch die Klebverbindung aufgenommen.

Der Klebstoff ist vorzugsweise in einer Fügefläche zwischen dem Beschlagoberteil und der Lehnenstruktur angeordnet. Der Klebstoff kann zwischen dem Beschlagoberteil und der Vertiefung in der Lehnenstruktur angeordnet sein. Der Klebstoff kann in der Vertiefung in der Lehnenstruktur angeordnet sein.

Unter einem Ausschluss von zusätzlichen Verbindungselementen ist zu verstehen, dass der Formschluss und die Klebverbindung die Anordnung zwischen dem Beschlagoberteil und der Lehnenstruktur in ausreichender Weise gegen eine Relativverschiebung in allen Raumrichtungen sichern, ohne dass dazu weitere Bauteile vorgesehen sind. Im Stand der Technik werden zur Sicherung gegen eine Relativverschiebung in allen Raumrichtungen zusätzliche Verbindungselemente, wie beispielsweise Schrauben, verwendet. Dadurch, dass keine zusätzlichen Verbindungselemente verwendet werden, muss die Lehnenstruktur nicht durch Zusatzteile, wie beispielsweise Einlegeteile oder sonstige Verstärkungsteile im Anbindungsbereich zu dem Beschlagoberteil verstärkt werden. Die Anzahl der Bauteile des Fahrzeugsitzes kann gering gehalten werden.

Die formschlüssige Anbindung des Beschlagoberteils ermöglicht eine großflächige Lasteinleitung in Lehnenstrukturen in Schalenbauweise. Unter einer Schalenbauweise ist eine lokal nur wenig profilierte, flächenhafte und gekrümmte Bauweise zu verstehen, die jedoch durchaus in einzelnen Bereichen auch Öffnungen aufweisen kann. Im Gegensatz zu einer solchen Schalenbauweise weisen Lehnenrahmen in Rahmenbauweise, beispielsweise aus einzelnen Stahlblechprofilen geschweißte Lehnenrahmen, eine stark profilierte Rahmenstruktur auf.

Zur Gewichtsminimierung ist die Lehnenstruktur in Leichtbauweise, insbesondere aus einem Leichtbauwerkstoff, ausgeführt. Metallische Leichtbauwerkstoffe sind beispielsweise Aluminium, Magnesium, hochfeste Stähle und Titan. Daneben gelten Faserverbundwerkstoffe als klassische Leichtbauwerkstoffe.

Die Lehnenstruktur kann besonders gewichtsoptimiert als Carbon-Schale, insbesondere als einteilige Carbon-Schale, ausgeführt sein. Lehnenstrukturen, die als einteilige Schale ausgeführt sind, sind besonders leicht und benötigen nur wenig Bauraum. Die Gewichtsvorteile des Carbon-Hybridwerkstoffes lassen sich durch die formschlüssige Anbindung optimal ausnutzen, weil auf schwere Einlegeteile mit Anschraubpunkten für die Beschlagoberteile verzichtet werden kann.

Die Vertiefung für die Aufnahme des Beschlagoberteils ist vorzugsweise in einem Seitenteil der Lehnenstruktur eingebracht. Unter einem Seitenteil sind Bereiche der Lehnenstruktur zu verstehen, die weitgehend in Längsrichtung orientiert sind. Insbesondere bei einer einschaligen Bauweise ist das Seitenteil oder sind die Seitenteile einstückig an der Schale ausgebildet. Alternativ kann die Vertiefung aber auch in anderen Bereichen der Lehnenstruktur vorgesehen sein, beispielsweise in Endbereichen einer Quertraverse. Die Vertiefung ist dabei vorteilhafterweise in einer Querrichtung vertieft gegenüber unmittelbar benachbarte Bereiche des Seitenteils ausgeführt. Der Formschluss kann dadurch Momente um eine in Querrichtung verlaufende Achse bestmöglich aufnehmen.

Insbesondere für eine hochfeste Klebverbindung zwischen der Lehnenstruktur und dem Beschlagoberteil ist es von Vorteil, wenn die Vertiefung weitgehend flächig und/oder senkrecht zu einer in Querrichtung verlaufenden Lehnenschwenkachse verläuft und/oder die Lehnenschwenkachse insbesondere annähernd durch den Flächenmittelpunkt der vertieften Fläche verläuft.

Zur Vergrößerung der Klebefläche zwischen einem Flansch des Beschlagoberteils und Randbereichen der Vertiefung ist es vorteilhaft, wenn eine in einer Längsrichtung des Fahrzeugsitzes gemessene Breite der Vertiefung und damit auch die in Längsrichtung gemessene Breite des Beschlagoberteils in Vertikalrichtung von unten nach oben gestuft abnimmt. Durch den gestuften Randbereich wird zudem das maximal übertragbare Moment zwischen dem Beschlagoberteil und der Lehnenstruktur erhöht. Besonders vorteilhaft beträgt die Anzahl der Stufen wenigstens zwei. Der Flansch ist in Querrichtung und in Richtung der Sitzmitte des Fahrzeugsitzes orientiert. Ein solcher Flansch versteift zudem die Steifigkeit des Beschlagoberteils und kann problemlos in der Vertiefung aufgenommen werden.

Die Lehne kann als Gleichteil für unterschiedlich breite Sitzunterbauten verwendet werden. Der Breitenausgleich findet über unterschiedliche Beschlagoberteile eines Baukastens statt, die insbesondere untereinander unterschiedlich breite Flansche aufweisen.

Die erfindungsgemäße Lösung bietet für Fahrzeugsitze mit Lehnenstrukturen aus einem Kunststoff oder einem faserverstärkten Kunststoff weitere Vorteile, da für eine Verbindung zwischen einem metallischen Beschlagoberteil und einer aus Kunststoff bestehenden Lehnenstruktur keine geeigneten Schweißverbindungen bekannt sind.

Vorzugsweise ist die Lehnenstruktur als tragende Lehnenstruktur ausgelegt und zumindest die Rückseite der tragenden Lehnenstruktur durch eine Designschale abgedeckt. Dadurch kann insbesondere eine in Schalenbauweise ausgeführte Lehnenstruktur gewichts- und komfortoptimiert konstruiert sein, ohne das äußere Erscheinungsbild des Fahrzeugsitzes zu berücksichtigen. Das äußere Erscheinungsbild des Fahrzeugsitzes wird durch die Designschale geprägt. Die Formgebung der tragenden Lehnenstruktur ist somit weitgehend unabhängig vom darzustellenden äußeren Erscheinungsbild der Sitzlehne. Die Lehnenstruktur kann zudem als Gleichteil in verschiedenen Sitzlehnen unterschiedlichen Designs eingesetzt werden. Eine kurzfristige Designänderung des Fahrzeugsitzes ist durch eine Modifizierung der Designschale möglich, ohne dass die sicherheitsrelevante, tragende Lehnenstruktur modifiziert werden muss. Zudem kann das Erscheinungsbild der Designschale mittels Lackierung, Bedruckung oder durch Verwendung von Farbfolien variiert werden, ohne dass ein Einfluss auf die Crasheigenschaften, beispielsweise durch chemische Reaktionen zwischen tragenden Strukturen und Lack, des Fahrzeugsitzes zu befürchten ist.

Unter dem Begriff einer tragenden Lehnenstruktur ist dabei eine Lehnenstruktur zu verstehen, die im Lastfall, beispielsweise während eines Crashs, aufgrund ihrer Festigkeit und Steifigkeit einen Großteil der auf die Sitzlehne wirkenden Kräfte aufnehmen kann.

Die Designschale deckt zumindest die Rückseite der Lehnenstruktur, das heißt die dem Rücken eines Insassen abgewandte Seite ab, kann jedoch auch seitliche Teilbereiche, beispielsweise im Bereich von den Insassenkörper bei Kurvenfahrten stützenden Sitzseitenwangen, verdecken. Insbesondere die Anbindungsbereiche des Beschlagoberteils an die Lehnenstruktur sind von der Designschale verdeckt.

Die Kombination einer Lehnenstruktur mit einer Designschale ermöglicht einen hohen Integrationsgrad an Funktionen in die Lehnenstruktur, ohne das Design negativ zu beeinflussen und dadurch eine Verringerung der Bauteilanzahl.

Eine weitere Gewichtsreduzierung lässt sich durch Verwendung eines sogenannten Leichtschaumes als Schaumteil erzielen.

Die erfindungsgemäße Sitzlehne kann insbesondere vorteilhaft für Sportsitze eingesetzt werden, ist jedoch nicht auf eine Verwendung in Sportsitzen beschränkt.

Der erfindungsgemäße Fahrzeugsitz kann auch ein Standardsitz für Großserienfahrzeuge sein.

Durch die erfindungsgemäße Befestigung des Beschlagoberteils an der Lehnenstruktur verringert sich die Komplexität und die Montagezeit des Fahrzeugsitzes.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes,
- Fig. 2:: eine Explosionsdarstellung des Ausführungsbeispiels,

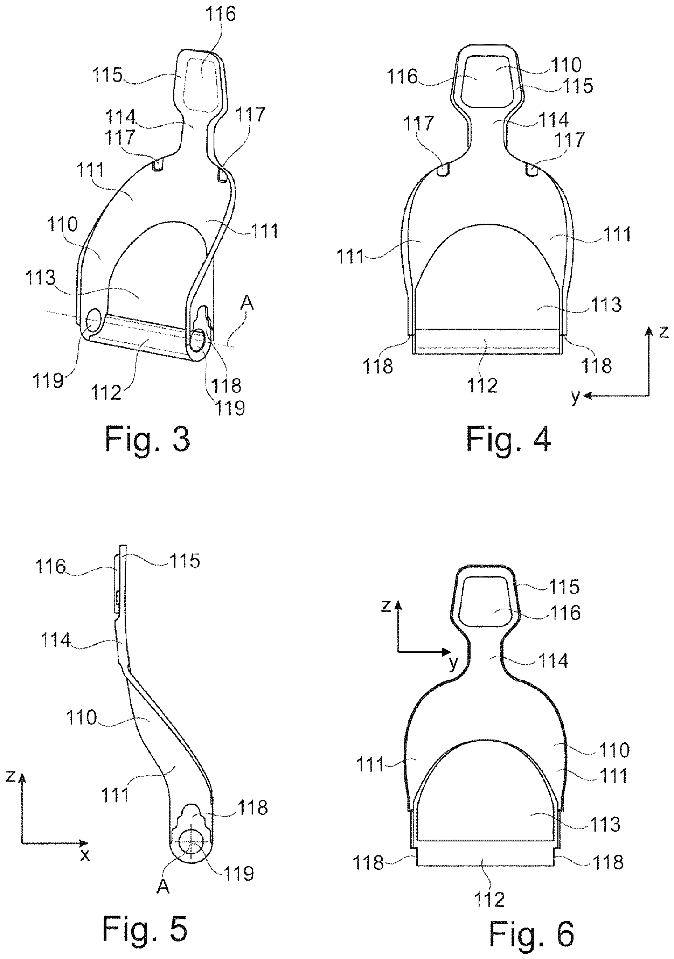

- Fig. 3:: eine perspektivische Ansicht auf die Vorderseite einer Lehnenstruktur der Sitzlehne des Ausführungsbeispiels,
- Fig. 4:: eine Vorderansicht der Lehnenstruktur aus Fig. 3,
- Fig. 5:: eine Seitenansicht der Lehnenstruktur aus Fig. 3,
- Fig. 6:: eine Rückansicht der Lehnenstruktur aus Fig. 3,
- Fig. 7:: eine perspektivische Ansicht eines in der Struktur des Fahrzeugsitzes positionierten SAE H-Punkt-Manikin, wobei die Designschale nicht dargestellt ist,
- Fig. 8:: eine weitere, der Fig. 7 ähnliche, perspektivische Ansicht eines in der Struktur des Fahrzeugsitzes positionierten SAE H-Punkt-Manikin,

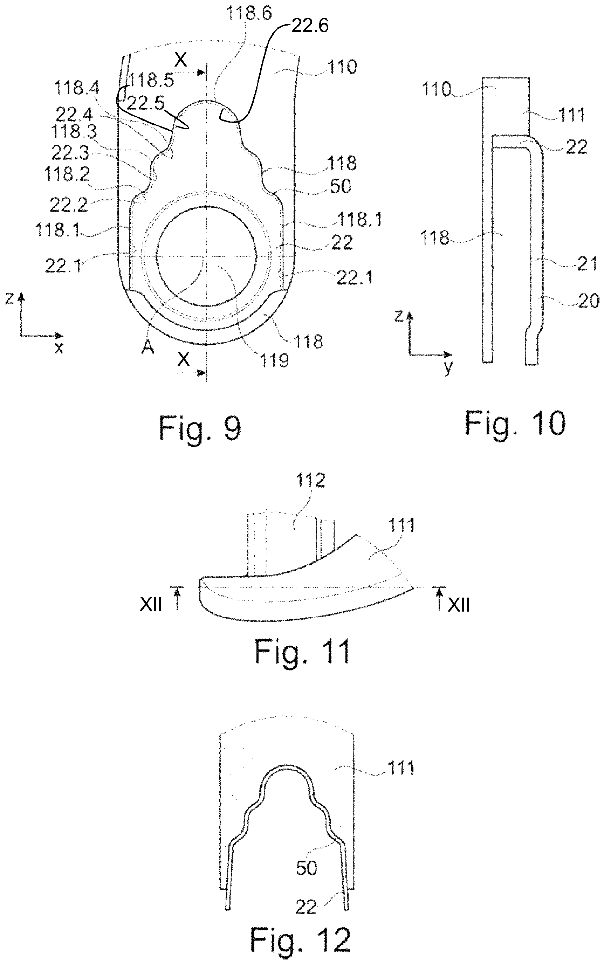

- Fig. 9:: eine Detailansicht aus der Seitenansicht aus Fig. 5,
- Fig. 10:: einen Schnitt entlang der Linie X - X in Fig. 9,
- Fig. 11:: eine Detailansicht aus einer Draufsicht auf die Lehnenstruktur aus Fig. 3 und
- Fig. 12:: einen Schnitt entlang der Linie XII - XII in Fig. 11.

Ein vorliegend als Sportsitz ausgebildeter Fahrzeugsitz 1 für ein Kraftfahrzeug weist eine Sitzlehne 100 und einen Sitzunterbau 200 auf. Die Sitzlehne 100 und der Sitzunterbau 200 sind mittels zweier an sich bekannter Beschläge 10 miteinander verbunden. Dazu weist jeder der beiden Beschläge 10 ein mit einer Lehnenstruktur 110 der Sitzlehne 100 verbundenes Beschlagoberteil 20 und ein mit einer Sitzunterbaustruktur 210 des Sitzunterbaus 200 verbundenes Beschlagunterteil 30 auf. Das Beschlagoberteil 20 und das Beschlagunterteil 30 sind über einen an sich bekannten Beschlagmechanismus relativ zueinander verstellbar, so dass die Neigung der Sitzlehne 100 um eine Lehnenschwenk-achse A einstellbar ist. Ein entsprechender Getriebebeschlag ist beispielsweise aus der DE 10 2010 035 377 A1 bekannt.

In einer Abwandlung des Ausführungsbeispiels ist die Sitzlehne 100 mittels der beiden Beschläge 10 unmittelbar an der Fahrzeugkarosserie angebunden. Die Sitzunterbaustruktur ist dann derart in die Fahrzeugkarosserie integriert, dass Teilbereiche der Fahrzeugkarosserie die Funktion der Sitzunterbaustruktur 210 übernehmen, beispielsweise das Abstützen des Sitzunterbaus, insbesondere eines Sitzkissens.

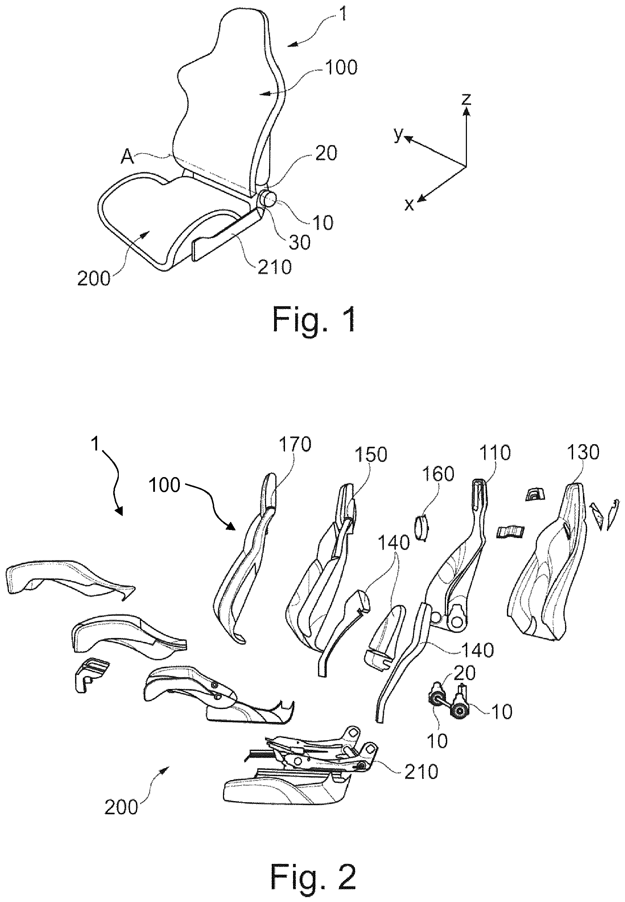

Der in Figur 1 schematisch dargestellte Fahrzeugsitz 1 wird nachfolgend unter Verwendung von drei senkrecht aufeinander stehenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Sitzlehne 100 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Die Sitzlehne 100 umfasst die Lehnenstruktur 110, deren Rückseite von einer Designschale 130 abgedeckt ist. Auf der Vorderseite der Lehnenstruktur 110 sind mehrere Einlegeteile 140 angeordnet. Die Vorderseite der Lehnenstruktur 110 und die Einlegeteile 140 sind zumindest weitgehend von einem Schaumteil 150 abgedeckt. Das Schaumteil 150 ist mit einem Bezug 170 abgedeckt, dessen äußere Konturen an der Designschale 130 befestigt sind, so dass der Bezug 170 und die Designschale 130 die Lehnenstruktur 110, die Einlegeteile 140 und das Schaumteil 150 zwischen sich aufnehmen. Optional kann an der Lehnenstruktur 110 zusätzlich ein Kopfstützenmodul 160, insbesondere für eine crashaktive Verstellung der Kopfstützenposition, befestigt sein.

Die Lehnenstruktur 110 ist ein lasttragendes Strukturteil des Fahrzeugsitzes 1. Die auf die Sitzlehne 100 wirkenden Kräfte, insbesondere Crashkräfte, werden weitgehend von der Lehnenstruktur 110 aufgenommen und über die Beschläge 10 in die Sitzunterbaustruktur 210 weitergeleitet.

Die Lehnenstruktur 110 ist vorliegend aus kohlenstofffaserverstärktem Kunststoff als sogenannte Carbon-Schale gefertigt. Alternativ kann die Struktur jedoch auch aus einem hochfesten Kunststoff, einem sonstigen Faserverbundwerkstoff oder aus Metallblech bestehen oder als Metallspritzgussteil ausgeführt sein. Vorliegend ist die Lehnenstruktur 110 einteilig ausgebildet, kann aber alternativ auch aus mehreren Einzelteilen zusammengefügt sein.

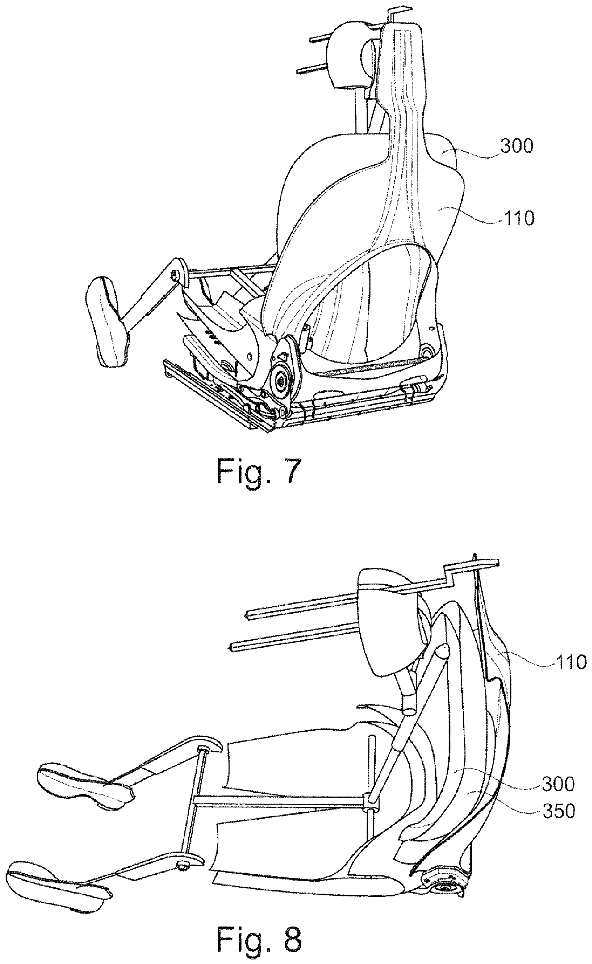

Wie in den Figuren 7 und 8 dargestellt, ist die Lehnenstruktur 110 derart ergonomisch geformt, dass der Abstand zwischen der Lehnenstruktur 110 und einem korrekt im Fahrzeugsitz 1 positionierten SAE H-Punkt-Manikin 300 (nach SAE-Norm J826), insbesondere dessen schüsselartigen Gesäß- und Rückenteilen, annähernd äquidistant ist. Insbesondere im Rückenbereich entspricht die zum Insassen hin orientierte Oberfläche der Lehnenstruktur 110 weitgehend einer äquidistanten Fläche 350, die 30mm beabstandet zum Rückenteil des SAE H-Punkt-Manikin 300 verläuft. Der aus diesem Abstand resultierende Bauraum ist bei einem fertig gepolsterten Fahrzeugsitz 1 durch die Einlegeteile 140, das Schaumteil 150 und den Bezug 170 ausgefüllt.

Die Designschale 130 und der Bezug 170 definieren das äußere Design der Sitzlehne 100, ohne wesentlich zur Festigkeit der Sitzlehne 100 beizutragen. Die Designschale 130 ist vorliegend als ein Spritzgussteil aus einem an sich bekannten Kunststoff ausgebildet. Der Bezug 170 besteht vorzugsweise weitgehend aus Stoff und/oder Leder.

Die Einlegeteile 140 sind vorzugsweise aus expandiertem Polypropylen (EPP) hergestellt und dienen der Befestigung weiterer in den Figuren nicht dargestellter Komponenten innerhalb der Sitzlehne 100. Weitere Komponenten sind beispielsweise an sich bekannte Lordosenstützen, Elektroantriebe oder Seitenwangenverstellmechanismen. Die Einlegeteile 140 tragen nur unwesentlich zur Festigkeit der Sitzlehne 100 bei.

Das Schaumteil 150 besteht vorliegend aus einem Polyurethan-Weichschaum und dient im Wesentlichen dem Sitzkomfort, ohne wesentlich zur Festigkeit der Sitzlehne 100 beizutragen.

Die Lehnenstruktur 110 ist weitgehend spiegelsymmetrisch zu einer parallel zur Längsrichtung x und parallel zur Vertikalrichtung z durch die Sitzmitte verlaufenden Ebene.

Die Lehnenstruktur 110 umfasst, in Querrichtung y gesehen, in beiden äußeren Bereichen ein weitgehend flächig ausgebildetes Seitenteil 111. Die beiden Seitenteile 111 verlaufen ausgehend von einem um die Lehnenschwenkachse A angeordneten und senkrecht zur Lehnenschwenkachse A orientierten unteren Bereich in Vertikalrichtung z zunehmend zur Sitzmitte hin gekrümmt und gedreht nach oben, und gehen dort ineinander über. Im unteren Bereich der Lehnenstruktur 110 sind die beiden Seitenteile 111 durch eine in Querrichtung y verlaufende Quertraverse 112 miteinander verbunden. Die beiden Seitenteile 111 und die Quertraverse 112 bilden zwischen sich eine erste Öffnung 113.

Ein Steg 114 verläuft ausgehend von dem Bereich der Lehnenstruktur, in dem die beiden Seitenteile 111 ineinander übergehen, im Bereich der Sitzmitte nach oben und endet in einem trapezförmigen Kopfstützenträger 115. Der Kopfstützenträger 115 weist eine als Vertiefung ausgebildete Kopfstützenaufnahme 116 auf.

Jeweils ein Befestigungspunkt 117 im oberen Bereich eines jeden Seitenteils 111 dient der Befestigung der Designschale 130, die dort beispielsweise mittels je einer angespritzten zungenförmigen Lasche von oben an der Lehnenstruktur 110 eingehängt ist.

Jedes der beiden Seitenteile 111 weist zur formschlüssigen Aufnahme des Beschlagoberteils 20 in seinem unteren Bereich eine Vertiefung 118 in Querrichtung y auf.

Die Vertiefung 118 verläuft - wie das übrige Seitenteil 111 in dessen unterem Bereich - weitgehende flächig und senkrecht zur Lehnenschwenkachse A. In der Mitte der Vertiefung 118 befindet sich eine kreisrunde zweite Öffnung 119, deren Mittelpunkt auf der Lehnenschwenkachse A liegt.

Die Vertiefung 118 ist vorliegend spiegelsymmetrisch zu einer Symmetrieebene, die die Lehnenschwenkachse A in sich aufnimmt und annähernd in Vertikalrichtung z verläuft. Der Abstand der Berandung einer Hälfte der Vertiefung 118 zu der Symmetrieebene variiert in Vertikalrichtung z und definiert die Breite der Vertiefung 118.

Die Tiefe der Vertiefung 118 gegenüber dem benachbarten Bereich des Seitenteils 111 ist konstant. Die Breite der Vertiefung 118 nimmt in Vertikalrichtung z von unten nach oben stufenweise ab, wobei die Stufen abgerundet ausgebildet sind. Die äußere Abgrenzung der Vertiefung 118 zu dem benachbarten Bereich des Seitenteils 111 wird durch einen Randbereich ausgebildet. Nach unten hin ist die Vertiefung 118 nicht berandet.

Auf Höhe der Lehnenschwenkachse A ist die Breite der Vertiefung 118 zwischen zwei linear und annähernd parallel zueinander verlaufenden ersten Randbereichen 118.1 am größten. Nach oben hin schließt sich an jeden ersten Randbereich 118.1 jeweils ein zweiter Randbereich 118.2 an. Die beiden zweiten Randbereiche 118.2 bilden jeweils eine abgerundete Stufe zwischen den beiden ersten Randbereichen 118.1 und zwei linear und annähernd parallel zueinander verlaufenden dritten Randbereichen 118.3. Nach oben hin schließt sich an jeden dritten Randbereich 118.3 jeweils ein vierter Randbereich 118.4 an. Die beiden vierten Randbereiche 118.4 bilden jeweils eine abgerundete Stufe zwischen den beiden dritten Randbereichen 118.3 und zwei linear und annähernd parallel zueinander verlaufenden fünften Randbereichen 118.5. An den beiden oberen Enden der beiden fünften Randbereiche 118.5 sind die beiden fünften Randbereiche 118.5 durch einen halbkreisförmig gekrümmten sechsten Randbereich 118.6 miteinander verbunden.

Die beiden fünften Randbereiche 118.5 sind gegenüber den beiden ersten und dritten Randbereichen 118.1, 118.3 kürzer ausgebildet und entfallen in einer Abwandlung des Ausführungsbeispiels vollständig, so dass die beiden vierten Randbereiche 118.4 in diesem Fall unmittelbar in den sechsten Randbereich 118.6 übergehen.

Die jeweils annähernd parallel zueinander verlaufenden Randbereiche 118.1, 118.3 und 118.5 verlaufen vorzugsweise geringfügig abweichend von der Parallelität nach oben hin leicht aufeinander zu, so dass die Vertiefung 118 auch in den annähernd parallelen Bereichen nach oben leicht konisch zuläuft. Der Begriff annähernd parallel soll daher sowohl eine mathematisch exakte Parallelität als auch Winkelabweichungen von bis zu 5° umfassen.

Die Tiefe der Randbereiche 118.1 bis 118.6 in Querrichtung y definiert die Tiefe der Vertiefung 118.

Das zweite Beschlagoberteil 20 ist vorliegend aus Stahlblech gefertigt und hat einen Grundkörper 21, der weitgehend parallel zur Längsrichtung x und zur Vertikalrichtung z verläuft. Die Außenkontur des Grundkörpers 21 weist einen Flansch 22 auf, der senkrecht zum Grundkörper 21 in Querrichtung y und in Richtung der Sitzmitte orientiert ist. Der Flansch 22 ist in mehrere Bereiche unterteilt, die jeweils komplementär zu den Randbereichen 118.1 bis 118.6 der Vertiefung 118 ausgebildet sind, so dass die Vertiefung 118 den Flansch 22 formschlüssig in sich aufnimmt. Vorliegend liegen jeweils zwei erste Flanschbereiche 22.1 an den beiden ersten Randbereichen 118.1, zwei zweite Flanschbereiche 22.2 an den beiden zweiten Randbereichen 118.2, zwei dritte Flanschbereiche 22.3 an den beiden dritten Randbereichen 118.3, zwei vierte Flanschbereiche 22.4 an den beiden vierten Randbereichen 118.4, zwei fünfte Flanschbereiche 22.5 an den beiden fünften Randbereichen 118.5 und ein sechster Flanschbereich 22.6 an dem sechsten Randbereich 118.6 an, gegebenenfalls unter Zwischenlage eines Klebstoffes 50.

In einer Abwandlung des Ausführungsbeispiels liegen zum Ausgleich von Fertigungstoleranzen nur einige der Flanschbereiche 22.1 bis 22.6 an den zugeordneten Randbereichen 118.1 bis 118.6 an. Teilweise sind die Flanschbereiche 22.1 bis 22.6 von den zugeordneten Randbereichen 118.1 bis 118.6 geringfügig entfernt.

Vorliegend ist der Flansch 22 und somit das Beschlagoberteil 20 mit der Lehnenstruktur 110 zusätzlich verklebt. Dazu ist eine dünne Schicht des Klebstoffs 50 zwischen den aneinander anliegenden Flanschbereichen 22.1 bis 22.6 und den Randbereichen 118.1 bis 118.6 vorgesehen.

### Bezugszeichenliste

- 1: Fahrzeugsitz, Sportsitz
- 10: Beschlag
- 20: Beschlagoberteil
- 21: Grundkörper
- 22: Flansch
- 22.1: erster Flanschbereich
- 22.2: zweiter Flanschbereich
- 22.3: dritter Flanschbereich
- 22.4: vierter Flanschbereich
- 22.5: fünfter Flanschbereich
- 22.6: sechster Flanschbereich
- 30: Beschlagunterteil
- 50: Klebstoff
- 100: Sitzlehne
- 110: Lehnenstruktur
- 111: Seitenteil
- 112: Quertraverse
- 113: erste Öffnung
- 114: Steg
- 115: Kopfstützenträger
- 116: Kopfstützenaufnahme
- 117: Befestigungspunkt
- 118: Vertiefung
- 118.1: erster Randbereich
- 118.2: zweiter Randbereich
- 118.3: dritter Randbereich
- 118.4: vierter Randbereich
- 118.5: fünfter Randbereich
- 118.6: sechster Randbereich
- 119: zweite Öffnung
- 130: Designschale
- 140: Einlegeteil
- 150: Schaumteil
- 160: Kopfstützenmodul
- 170: Bezug
- 200: Sitzunterbau
- 210: Sitzunterbaustruktur
- 300: SAE H-Punkt-Manikin
- 350: äquidistante Fläche
- A: Lehnenschwenkachse
- x: Längsrichtung
- y: Querrichtung
- z: Vertikalrichtung

## Patentansprüche

1. Fahrzeugsitz (1), insbesondere Kraftfahrzeugsitz, mit einem Sitzunterbau (200), welcher als tragende Struktur eine Sitzunterbaustruktur (210) aufweist, einer Sitzlehne (100), welche als tragende Struktur eine in Schalenbauweise ausgeführte Lehnenstruktur (110) aufweist, und mindestens einem Beschlag (10), der die Sitzunterbaustruktur (210) mit der Lehnenstruktur (110) verbindet, wobei der Beschlag (10) ein an der Lehnenstruktur (110) befestigtes Beschlagoberteil (20) und ein an der Sitzunterbaustruktur (210) befestigtes Beschlagunterteil (30) aufweist, wobei das Beschlagoberteil (20) unter Ausschluss von zusätzlichen Verbindungselementen formschlüssig in einer Vertiefung (118) der Lehnenstruktur (110) angeordnet ist und mittels eines Klebstoffes (50) stoffschlüssig mit der Lehnenstruktur (110) verbunden ist, **dadurch gekennzeichnet, dass** das Beschlagoberteil (20) einen Flansch (22) aufweist, der in Querrichtung (y) und in Richtung der Sitzmitte des Fahrzeugsitzes (1) orientiert ist, und der Flansch (22) formschlüssig in der Vertiefung (118) aufgenommen ist.

2. Fahrzeugsitz (1) nach Anspruch 1, **dadurch gekennzeichnet, dass** die Lehnenstruktur (110) in Leichtbauweise, ausgeführt ist.

3. Fahrzeugsitz (1) nach Anspruch 1 oder 2, **dadurch gekennzeichnet, dass** die Lehnenstruktur (110) aus einem Leichtbauwerkstoff ausgeführt ist.

4. Fahrzeugsitz (1) nach einem der Ansprüche 1 bis 3, **dadurch gekennzeichnet, dass** die Lehnenstruktur (110) aus einem Kunststoff ausgeführt ist.

5. Fahrzeugsitz (1) nach einem der Ansprüche 1 bis 4, **dadurch gekennzeichnet, dass** die Lehnenstruktur (110) als einteilige Schale ausgeführt ist.

6. Fahrzeugsitz (1) nach einem der Ansprüche 1 bis 5, **dadurch gekennzeichnet, dass** die Lehnenstruktur (110) als Carbon-Schale ausgeführt ist.

7. Fahrzeugsitz (1) nach einem der Ansprüche 1 bis 6, **dadurch gekennzeichnet, dass** die Vertiefung (118) in einem Seitenteil (111) der Lehnenstruktur (110) eingebracht ist.

8. Fahrzeugsitz (1) nach Anspruch 7, **dadurch gekennzeichnet, dass** die Vertiefung (118) in einer Querrichtung (y) vertieft gegenüber unmittelbar benachbarten Bereichen des Seitenteils (111) ausgeführt ist.

9. Fahrzeugsitz (1) nach einem der Ansprüche 1 bis 8, **dadurch gekennzeichnet, dass** die Vertiefung (118) weitgehend flächig verläuft.

10. Fahrzeugsitz (1) nach Anspruch 9, **dadurch gekennzeichnet, dass** die Vertiefung (118) senkrecht zu einer in Querrichtung (y) verlaufenden Lehnenschwenkachse (A) verläuft.

11. Fahrzeugsitz (1) nach einem der Ansprüche 1 bis 10, **dadurch gekennzeichnet, dass** die in einer Längsrichtung (x) gemessene Breite der Vertiefung (118) in einer Vertikalrichtung (z) von unten nach oben gestuft abnimmt.

12. Fahrzeugsitz (1) nach Anspruch 11, **dadurch gekennzeichnet, dass** die Anzahl der Stufen wenigstens zwei beträgt.

13. Fahrzeugsitz (1) nach Anspruch 11 oder 12, **dadurch gekennzeichnet, dass** die Außenkontur des Beschlagoberteils (20) an die gestufte Kontur der Vertiefung (118) derart angepasst ist, dass das Beschlagoberteil (20), formschlüssig in der Vertiefung (118) aufgenommen ist.

## Claims

1. Vehicle seat (1), in particular motor vehicle seat, having a seat base (200) which has, as load-bearing structure, a seat base structure (210), having a backrest (100) which has, as load-bearing structure, a backrest structure (110) of shell type of construction, and having at least one fitting (10) which connects the seat base structure (210) to the backrest structure (110), wherein the fitting (10) has a fitting upper part (20), which is fastened to the backrest structure (110), and a fitting lower part (30), which is fastened to the seat base structure (210), wherein the fitting upper part (20) is arranged, with omission of additional connecting elements, in positively locking fashion in a depression (118) of the backrest structure (110) and is connected cohesively to the backrest structure (110) by way of an adhesive (50), **characterized in that** the fitting upper part (20) has a flange (22) which is oriented in the transverse direction (y) and in the direction of the seat center of the vehicle seat (1), and the flange (22) is received in positively locking fashion in the depression (118) .

2. Vehicle seat (1) according to Claim 1, **characterized in that** the backrest structure (110) is of lightweight type of construction.

3. Vehicle seat (1) according to Claim 1 or 2, **characterized in that** the backrest structure (110) is formed from a lightweight structural material.

4. Vehicle seat (1) according to one of Claims 1 to 3, **characterized in that** the backrest structure (110) is formed from a plastic.

5. Vehicle seat (1) according to one of Claims 1 to 4, **characterized in that** the backrest structure (110) is in the form of a unipartite shell.

6. Vehicle seat (1) according to one of Claims 1 to 5, **characterized in that** the backrest structure (110) is in the form of a carbon shell.

7. Vehicle seat (1) according to one of Claims 1 to 6, **characterized in that** the depression (118) is formed in a side part (111) of the backrest structure (110).

8. Vehicle seat (1) according to Claim 7, **characterized in that** the depression (118) is formed so as to be recessed in a transverse direction (y) in relation to immediately adjacent regions of the side part (111).

9. Vehicle seat (1) according to one of Claims 1 to 8, **characterized in that** the depression (118) runs substantially areally.

10. Vehicle seat (1) according to Claim 9, **characterized in that** the depression (118) runs perpendicular to a backrest pivot axis (A) which runs in the transverse direction (y).

11. Vehicle seat (1) according to one of Claims 1 to 10, **characterized in that** the width of the depression (118) as measured in a longitudinal direction (x) decreases in stepped fashion from bottom to top in a vertical direction (z).

12. Vehicle seat (1) according to Claim 11, **characterized in that** the number of steps is at least two.

13. Vehicle seat (1) according to Claim 11 or 12, **characterized in that** the outer contour of the fitting upper part (20) is adapted to the stepped contour of the depression (118) such that the fitting upper part (20) is received in positively locking fashion in the depression (118).

## Revendications

1. Siège de véhicule (1), en particulier siège de véhicule automobile, comprenant une embase de siège (200) qui présente en tant que structure porteuse une structure d'embase de siège (210), un dossier (100) qui présente en tant que structure porteuse une structure de dossier (110) réalisée sous forme de coque, et au moins une ferrure (10) qui relie la structure d'embase de siège (210) à la structure de dossier (110), la ferrure (10) présentant une partie supérieure de ferrure (20) fixée à la structure de dossier (110) et une partie inférieure de ferrure (30) fixée à la structure d'embase de siège (210), la partie supérieure de ferrure (20) étant disposée par engagement par correspondance de formes dans un renfoncement (118) de la structure de dossier (110) en excluant des éléments de connexion supplémentaires, et étant connectée à la structure de dossier (110) par liaison de matière au moyen d'un adhésif (50), **caractérisé en ce que** la partie supérieure de ferrure (20) présente une bride (22) qui est orientée dans la direction transversale (y) et dans la direction du centre du siège du siège de véhicule (1), et la bride (22) est reçue par engagement par correspondance de formes dans le renfoncement (118).

2. Siège de véhicule (1) selon la revendication 1, **caractérisé en ce que** la structure de dossier (110) est réalisée sous forme de construction légère.

3. Siège de véhicule (1) selon la revendication 1 ou 2, **caractérisé en ce que** la structure de dossier (110) est réalisée en un matériau léger.

4. Siège de véhicule (1) selon l'une quelconque des revendications 1 à 3, **caractérisé en ce que** la structure de dossier (110) est réalisée en plastique.

5. Siège de véhicule (1) selon l'une quelconque des revendications 1 à 4, **caractérisé en ce que** la structure de dossier (110) est réalisée sous forme de coque d'une seule pièce.

6. Siège de véhicule (1) selon l'une quelconque des revendications 1 à 5, **caractérisé en ce que** la structure de dossier (110) est réalisée sous forme de coque en carbone.

7. Siège de véhicule (1) selon l'une quelconque des revendications 1 à 6, **caractérisé en ce que** le renfoncement (118) est réalisé dans une partie latérale (111) de la structure de dossier (110).

8. Siège de véhicule (1) selon la revendication 7, **caractérisé en ce que** le renfoncement (118) est réalisé de manière renfoncée dans une direction transversale (y) par rapport à des régions immédiatement adjacentes de la partie latérale (111) .

9. Siège de véhicule (1) selon l'une quelconque des revendications 1 à 8, **caractérisé en ce que** le renfoncement (118) s'étend essentiellement à plat.

10. Siège de véhicule (1) selon la revendication 9, **caractérisé en ce que** le renfoncement (118) s'étend perpendiculairement à un axe de pivotement du dossier (A) s'étendant dans la direction transversale (y).

11. Siège de véhicule (1) selon l'une quelconque des revendications 1 à 10, **caractérisé en ce que** la largeur du renfoncement (118), mesurée dans une direction longitudinale (x), diminue dans une direction verticale (z) de bas en haut de manière étagée.

12. Siège de véhicule (1) selon la revendication 11, **caractérisé en ce que** le nombre d'étages est d'au moins deux.

13. Siège de véhicule (1) selon la revendication 11 ou 12, **caractérisé en ce que** le contour extérieur de la partie supérieure de ferrure (20) est adapté au contour étagé du renfoncement (118) de telle sorte que la partie supérieure de ferrure (20) soit reçue par engagement par correspondance de formes dans le renfoncement (118).
